# FASCICULE DE BREVET EUROPEEN

(11) **EP 3 803 127 B1**
(45) Date de publication et mention de la délivrance du brevet: **09.08.2023**
(21) Numéro de dépôt: 19737827.6
(22) Date de dépôt: 28.05.2019
(51) Int. Cl.: F04D 17/10, F04D 25/06, F04D 29/02, F04D 29/42, F04D 29/58

(54) **ARCHITECTURE THERMIQUE DE COMPRESSEUR D'AIR**
THERMISCHE ARCHITEKTUR FÜR LUFTKOMPRESSOR
THERMAL ARCHITECTURE OF AN AIR COMPRESSOR

(30) Priorité: 31.05.2018 FR 1854715
(43) Date de publication de la demande: 14.04.2021
(73) Titulaire: Safran Electrical & Power, 31702 Blagnac (FR)
(72) Inventeur: STEFANOVIC, Nicolas, 77550 MOISSY-CRAMAYEL (FR); POLIN, Michael, 77550 MOISSY-CRAMAYEL (FR); GENIN, Arnaud, 77550 MOISSY-CRAMAYEL (FR)
(74) Mandataire: Cabinet Beau de Loménie
(86) Numéro de dépôt international: PCT/FR2019/051230
(87) Numéro de publication internationale: WO 2019/229352

(56) Documents cités:
- WO-A1-2017/141312
- DE-A1-102007 017 827
- DE-B3-102014 002 439
- FR-A1- 3 045 111

## Description

### Arrière-plan de l'invention

L'invention concerne un compresseur d'air pouvant être intégré dans un aéronef, notamment dans la turbomachine de celui-ci. Plus précisément, l'invention concerne une architecture thermique de compresseur d'air. Un tel compresseur d'air peut notamment être destiné à un système de pile à combustible en vue d'alimenter en air celle-ci.

Les aspects thermiques constituent une problématique particulièrement importante pour les compresseurs d'air. A titre d'exemple, pour un compresseur d'air centrifuge présentant un taux de compression d'air de 2.3, on constate typiquement une élévation de la température de l'air compressé comprise entre 130°C et 140°C. La température de l'air compressé peut alors par conduction thermique se propager le long du corps du compresseur d'air et induire une élévation en température de celui-ci.

Les compresseurs d'air sont par ailleurs couramment associés à des composants électroniques configurés pour assurer leur alimentation en puissance ainsi que leur commande. Compte tenu de la fragilité de ces composants électroniques, il convient de limiter la température des compresseurs d'air, une température trop élevée risquant de conduire à un endommagement des composants électroniques. En l'état, le fait de limiter la température des compresseurs d'air implique alors de limiter les taux de compression de ces derniers.

Afin de palier ce problème et d'autoriser des taux de compression plus élevés, une solution connue consiste à disposer sur le corps d'un compresseur d'air une barrière thermique, typiquement en Titane ou en Inox, pouvant se présenter sous la forme d'un joint plat. Une telle solution présente pour avantage de réduire la conduction thermique du corps du compresseur, et permet donc la mise en oeuvre de taux de compression d'air plus importants. Cependant, l'ajout d'une barrière thermique impacte fortement la masse ainsi que le volume du compresseur d'air. Une autre solution connue consiste à utiliser un système de refroidissement associé au corps du compresseur d'air. Néanmoins, une telle solution impacte une fois encore fortement la masse et le volume du compresseur d'air.

En l'état, les solutions existantes s'avèrent limitées et il perdure un besoin d'obtenir des taux de compression d'air élevés tout en limitant la masse et le volume des compresseurs d'air.

FR 3 045 111 A1 divulgue un compresseur d'air selon l'état de la technique et DE 10 2014 002439 B3, WO 2017/141312 A1 et DE 10 2007 017827 A1 divulguent d'autres solutions existantes.

### Objet et résumé de l'invention

La présente invention a pour but de remédier aux inconvénients précités.

A cet effet, l'invention propose un compresseur d'air comprenant :
- une roue de compression de type centrifuge définissant une direction axiale et une direction radiale,
- une ouverture d'admission d'air s'étendant circonférentiellement autour de la roue de compression et débouchant sur une pièce de compression,
- la pièce de compression comprenant une première partie formant une volute d'éjection d'air comprimé montée en regard de la roue de compression dans la direction radiale, et une seconde partie comprenant une portion annulaire s'étendant autour de la première partie, la portion annulaire s'étendant radialement vers l'intérieur et vers l'extérieur de la volute, la seconde partie comprenant en outre un tore de déviation d'air prolongeant la portion annulaire et délimitant un orifice central recevant au moins une partie de la roue de compression, la volute étant en un matériau métallique et la portion annulaire de la seconde partie en matériau thermoplastique chargé en éléments non-métalliques, et le matériau thermoplastique présentant une dilatation thermique correspondant à celle du matériau métallique.

Avantageusement, la réalisation dans le compresseur d'air d'une pièce de compression formée en deux parties permet de limiter l'échauffement de celui-ci. La volute d'éjection d'air comprimé est réalisée en matériau métallique, et présente ainsi une dilatation thermique proche de celle de la roue de compression. En cas de dilatation thermique de la roue de compression résultant de l'échauffement de l'air comprimé, la volute se dilate également permettant ainsi de limiter tout risque de frottement avec la roue de compression. Le matériau thermoplastique de la portion annulaire permet quant à lui de limiter la conductivité thermique du corps du compresseur d'air. Il est ainsi possible de mettre en oeuvre des taux de compression d'air élevés, tout en écartant un risque d'échauffement du compresseur d'air qui serait susceptible de conduire à l'endommagement de son électronique de commande et de puissance. Par ailleurs, l'utilisation d'un matériau thermoplastique implique une masse volumique particulièrement faible par comparaison aux solutions d'isolation ou de refroidissement existantes. Ainsi, la mise en oeuvre de la portion annulaire en matériau thermoplastique permet également de minimiser la masse du compresseur d'air. La charge du matériau thermoplastique par des éléments non-métalliques permet en outre de conserver une masse volumique faible tout en assurant à la portion annulaire des propriétés de dilatation thermiques correspondantes à celles de la volute mécanique. Ainsi, le matériau choisi pour la portion annulaire permet de suivre toute dilatation thermique éventuelle de la volute de sorte à empêcher tout risque de détachement mécanique entre ces pièces.

Dans un exemple de réalisation, le compresseur d'air comprend en outre un premier carter de révolution s'étendant entre l'ouverture d'admission d'air et la pièce de compression, au moins un canal d'acheminement d'air permettant à l'air de circuler dans la direction axiale depuis l'ouverture d'admission d'air, et des passages communiquant avec ledit au moins un canal d'acheminement d'air configurés pour permettre à l'air de circuler dans la direction axiale du canal d'acheminement vers le tore.

Dans un exemple de réalisation du compresseur d'air, la volute est en Aluminium.

Dans un exemple de réalisation du compresseur d'air, la portion annulaire est en polyétheréthercétone chargé en carbone. L'utilisation d'un tel matériau présente pour avantage de comporter une conductivité thermique environ mille fois moins importante que des matériaux en Inox ou Titane qui sont couramment utilisés en tant qu'isolants. Le polyétheréthercétone présente par ailleurs une masse volumique significativement moins élevée que l'Aluminium le Titane ou l'Inox. La mise en oeuvre d'une portion annulaire en polyétheréthercétone permet donc de réduire significativement la masse du compresseur d'air.

Dans un exemple de réalisation du compresseur d'air, la portion annulaire est une pièce moulée par injection sur la volute.

L'invention propose également, selon un autre aspect, un aéronef comprenant le compresseur d'air résumé ci-dessus.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'un compresseur d'air selon un premier mode de réalisation selon l'invention,
- la figure 2 est une vue en coupe selon le plan de coupe II-II du compresseur d'air de la figure 1 selon un premier mode de réalisation,
- la figure 3 est une vue en coupe selon le plan de coupe III-III d'une pièce de compression constitutive du compresseur d'air de la figure 1,
- la figure 4 est une vue en coupe d'un compresseur d'air selon un deuxième mode de réalisation qui n'est pas selon l'invention.

### Description détaillée de modes de réalisation

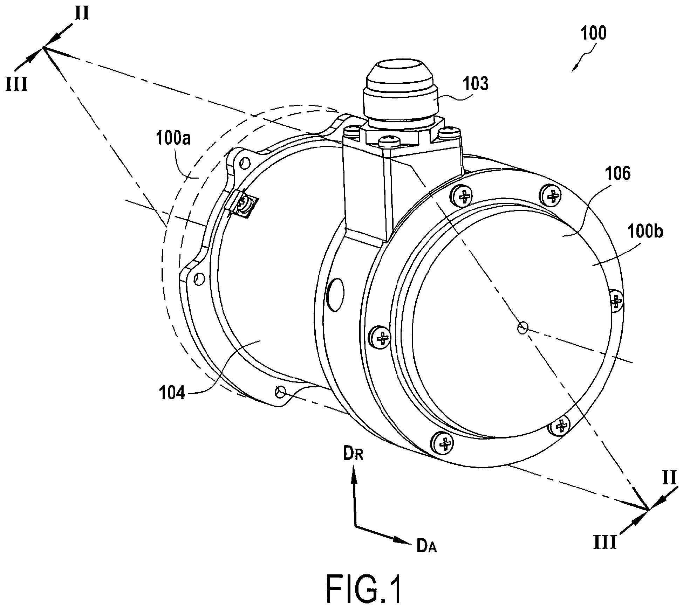

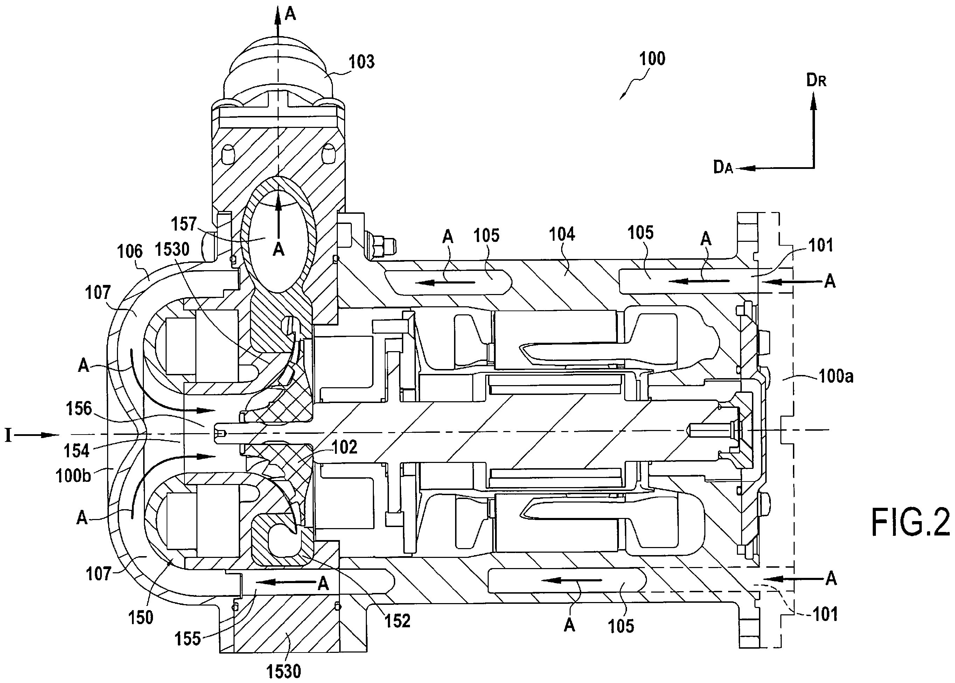

La figure 1 illustre une vue en perspective d'un compresseur d'air 100 de type centrifuge. La figure 2 correspond à une vue en coupe selon le plan II-II de ce compresseur d'air 100, et la flèche I indiquée sur cette figure renvoie à l'orientation de la vue en perspective de la figure 1. Le compresseur d'air 100 peut éventuellement, mais pas nécessairement, être intégré dans un aéronef, notamment dans la turbomachine de celui-ci.

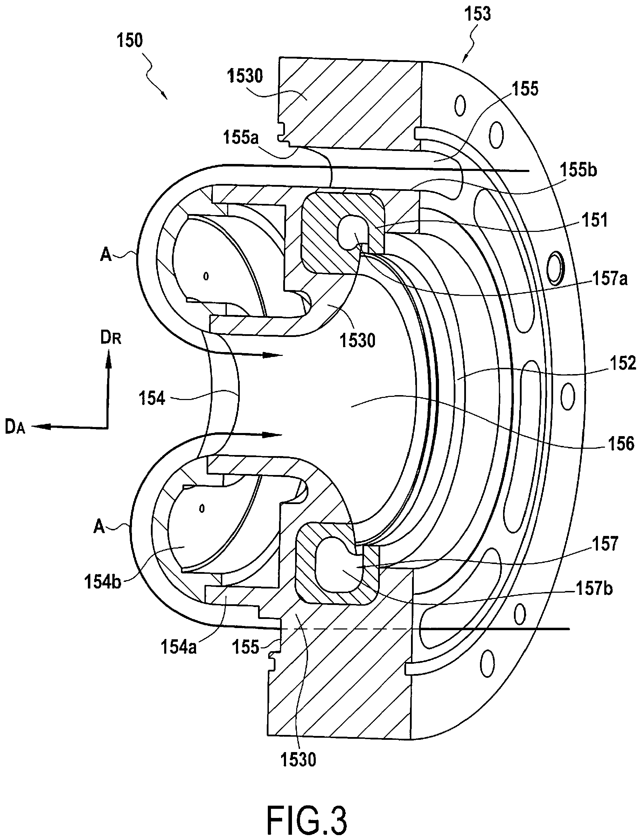

Le compresseur d'air 100 comprend une ouverture d'admission d'air 101, dans lequel un flux d'air A est acheminé à l'aide de moyens non-illustrés. La direction de circulation du flux d'air A dans le compresseur est symbolisée par des flèches unidirectionnelles sur les figures 2 et 3.

De manière connue, le compresseur d'air 100 compresse à l'aide d'une roue de compression 102 le flux d'air A reçu, puis l'expulse via une sortie d'air 103. Un tel compresseur d'air 100 peut notamment être utilisé dans un système de pile à combustible en vue d'alimenter en air ladite pile.

La roue de compression 102 est de type centrifuge et définit une direction axiale DA et une direction radiale DR. Le compresseur d'air 100 s'étend axialement selon l'axe DA entre une première extrémité 100a et une seconde extrémité 100b située à l'opposé de la première extrémité 100a. L'ouverture d'admission d'air 101 est située au niveau de la première extrémité 100a et s'étend circonférentiellement autour de la roue de compression 102.

Un premier carter 104 s'étend axialement entre l'ouverture d'admission d'air 101 et une pièce de compression 150. La figure 3 illustre une vue en coupe de la pièce de compression 150 selon le plan de coupe III-III illustré sur la figure 1.

Le premier carter 104 comprend en outre au moins un canal d'acheminement d'air 105 permettant à l'air A de circuler dans la direction axiale DA à partir de l'ouverture d'admission d'air 101.

La pièce de compression 150 comprend une première partie 151 formant une volute 152 d'éjection d'air comprimé montée en regard de la roue de compression 102 selon la direction radiale DR. La pièce de compression 150 comprend en outre une seconde partie 153, au moins en partie annulaire, s'étendant autour de la première partie. Plus précisément, comme représenté sur la figure 3, la seconde partie 153 comprend une portion annulaire 1530 qui s'étend radialement vers l'intérieur et vers l'extérieur à partir de la volute 152.

La seconde partie 153 comprend en outre un tore 154 de déviation d'air prolongeant la portion annulaire 1530 suivant la direction axiale DA et des passages 155 définissant des conduits d'air. Le tore 154 délimite un orifice central 156 recevant au moins une partie de la roue de compression 102. Les passages 155 ménagés dans la seconde partie 153 communiquent avec ledit au moins un canal d'acheminement d'air 105 de manière à permettre la circulation de l'air A du canal d'acheminement d'air 105 vers le tore 154 selon la direction axiale DA.

Ainsi, les passages 155 définissent chacun selon la direction radiale DR une paroi externe 155a et une paroi interne 155b. Le tore 154 s'étend alors selon la direction axiale DA dans le prolongement de chaque paroi interne 155b de manière à dévier l'air A issu des passages 155 vers l'orifice central 156 de la pièce de compression 150. Le compresseur d'air 100 comprend en outre un second carter 106 circulaire monté sur la pièce de compression 150. Le second carter 106 s'étend selon la direction axiale DA dans le prolongement de la paroi externe 155a de chaque passage 155 et est espacé du tore 154. Ainsi, le second carter 106 coopère avec les passages 155 et le tore 154 de manière à former des canaux 107 de circulation d'air permettant de dévier l'air A issu des passages vers l'orifice central 156 de la pièce de compression 150.

Une gorge 157 creuse est ménagée dans la volute 152. Une première extrémité 157a de cette gorge 157 débouche vers l'orifice central 156 de la pièce de compression 150 et une seconde extrémité 157b est raccordée à la sortie d'air 103 du compresseur d'air 100. Le diamètre de la gorge 157 croit de manière continue entre les première et seconde extrémités 157a, 157b. Ainsi, de manière connue, le fonctionnement du compresseur d'air 100 est le suivant. De l'air A est acheminé vers l'admission d'air 101 du compresseur, s'écoule successivement dans ledit au moins un canal d'acheminement d'air 105, dans les passages 155, puis dans les canaux 107 de manière à être dévié vers l'orifice central 156 de la pièce de compression 150. La rotation de la roue de compression 102 accélère et dévie ensuite l'air A, qui a été acheminé dans l'orifice central 156 de la pièce de compression 150, vers la première extrémité 157a de la gorge 157 de la volute 152. L'air A circulant au travers la gorge 157 de la volute 152 est alors compressé puis expulsé au travers la sortie d'air 103.

Conformément à l'invention, en vue de limiter un éventuel échauffement du compresseur d'air 100 lié à la température de l'air A expulsé, la volute 152, d'une part, et, d'autre part, la portion annulaire 1530 et éventuellement aussi le tore 154 sont réalisés en des matériaux distincts: la volute étant en un matériau métallique et la portion annulaire de la deuxième partie en matériau thermoplastique chargé en éléments non-métalliques, et le matériau thermoplastique présentant une dilatation thermique correspondant à celle du matériau métallique.

La volute 152 est réalisée en un matériau métallique. La volute 152 étant en regard de la roue de compression 102, le matériau métallique constitutif de la volute 152 est choisi de manière à présenter des caractéristiques de dilatation thermique proches ou correspondantes à celles de la roue de compression 102. Ainsi, en cas de dilatation thermique de la roue de compression 102 liée à un échauffement de l'air compressé, la volute 152 se dilate également de manière proche ou similaire. Tout risque de frottement entre la volute 152 et la roue de compression 102 se voit ainsi écarté.

La volute 152 peut à titre d'exemple être réalisée en Aluminium. Ce métal présente en effet de bonnes caractéristiques de dilatation thermique et une bonne tenue mécanique pouvant contenir tout débris, dans une situation peu probable d'un éclatement de la roue de compression 102.

Dans un mode de réalisation préféré, la portion annulaire et aussi le tore 154 sont réalisés en un matériau thermoplastique chargé en éléments non-métalliques. L'utilisation d'un matériau thermoplastique comporte en effet pour avantage de présenter une conductivité thermique faible, permettant donc de limiter l'échauffement du corps du compresseur d'air 100 par l'air compressé qu'il expulse. Il est ainsi possible de mettre en oeuvre des taux de compression d'air élevés, tout en limitant les risques d'échauffement du compresseur d'air 100. Les risques d'impacts thermiques susceptibles de conduire à l'endommagement de l'électronique de puissance ou de commande du compresseur d'air 100 se voient donc aussi écartés. La portion annulaire et le tore 154 sont par exemple fabriqués en polyétheréthercétone, ce matériau étant couramment désigné sous le sigle PEEK (PolyEtherEtherKetone).

Un tableau comparant la conductivité thermique et la masse volumique d'un matériau PEEK vis-à-vis de matériaux en Inox, Titane et Aluminium est donné ci-dessus :

| | | |
|---|---|---|
| **Conductivité Thermique** | Aluminium | 237 W.m⁻¹.K⁻¹ |
| | Inox | 26 W.m⁻¹.K⁻¹ |
| | Titane | 20 W.m⁻¹.K⁻¹ |
| | PEEK | 0.25 W.m⁻¹.K⁻¹ |
| **Masse volumique** | Inox | 7500 Kg.m⁻¹ |
| | Titane | 4500 Kg.m⁻¹ |
| | Aluminium | 2700 Kg.m⁻¹ |
| | PEEK | 1300 Kg.m⁻¹ |

On constate ici que l'utilisation d'un matériau PEEK pour la fabrication de la portion annulaire 1530 et du tore 154 permet de réduire significativement la conductivité thermique du compresseur, le matériau PEEK présentant à titre d'exemple une conductivité thermique environ mille fois moins élevée que celle de l'Aluminium. La masse du compresseur d'air 100 se voit aussi réduite, le matériau PEEK présentant à titre d'exemple une conductivité thermique environ deux fois moins importante que celle de l'Aluminium.

Conformément à l'invention, la portion annulaire 1530 étant disposée autour de la volute 152 afin de former la pièce de compression 150, celle-ci doit être capable de suivre toute dilatation thermique éventuelle de la volute 152. Pour ce faire, le matériau thermoplastique est chargé en éléments non-métalliques, de sorte que le matériau thermoplastique présente une dilatation thermique correspondant à celle du matériau métallique de la volute 152. Autrement dit, le matériau thermoplastique de la portion annulaire 1530 et du tore 154 et le matériau métallique de la volute 152 présentent des coefficients de dilatation thermique choisis de manière à permettre un serrage mécanique entre ces deux matériaux (en fonction des contraintes mécaniques admissibles) et sur une plage de température prédéterminée.

Ainsi, le matériau constitutif de la portion annulaire et du tore 154 permet de suivre toute dilatation thermique éventuelle de la volute 152, limitant tout risque de détachement mécanique entre ces pièces. A titre d'exemple, du carbone peut être utilisé en tant qu'élément de charge non-métallique. Ainsi, en lien avec l'exemple précédent, le matériau thermoplastique constituant la portion annulaire 1530 et le tore 154 peut être un matériau PEEK chargé en carbone. Dans l'exemple d'une volute 152 en Aluminium, on peut ainsi réaliser une portion annulaire et un tore en PEEK présentant un coefficient de dilatation égal (ou proche de l'ordre de plus ou moins 10⁻⁶) de l'Aluminium en ajustant le pourcentage de charge en carbone dans ce matériau.

A des fins de précisions mécaniques la volute 152 peut, par exemple, être fabriquée en fonderie cire perdue. Afin d'obtenir la pièce de compression 150, la portion annulaire 1530 et le tore 154 peut éventuellement, mais non-nécessairement, être moulé par injection sur la volute 152 après fabrication de celle-ci. Par ailleurs, afin de diminuer encore la masse du compresseur d'air 100, le tore 154 peut être fabriqué sous la forme d'un volume creux. Ainsi, sur la figure 3, le tore 154 est obtenu par assemblage de deux parties creuses 154a, 154b.

Une architecture particulière de compresseur d'air 100 a ici été décrite. Cependant, il est entendu que les modes de réalisations de la pièce de compression 150, de la volute 152, de la portion annulaire 1530 et du tore 154 peuvent s'appliquer à une autre architecture de compresseur d'air, le compresseur d'air étant selon l'invention s'il comprend toutes les caractéristiques de la revendication 1.

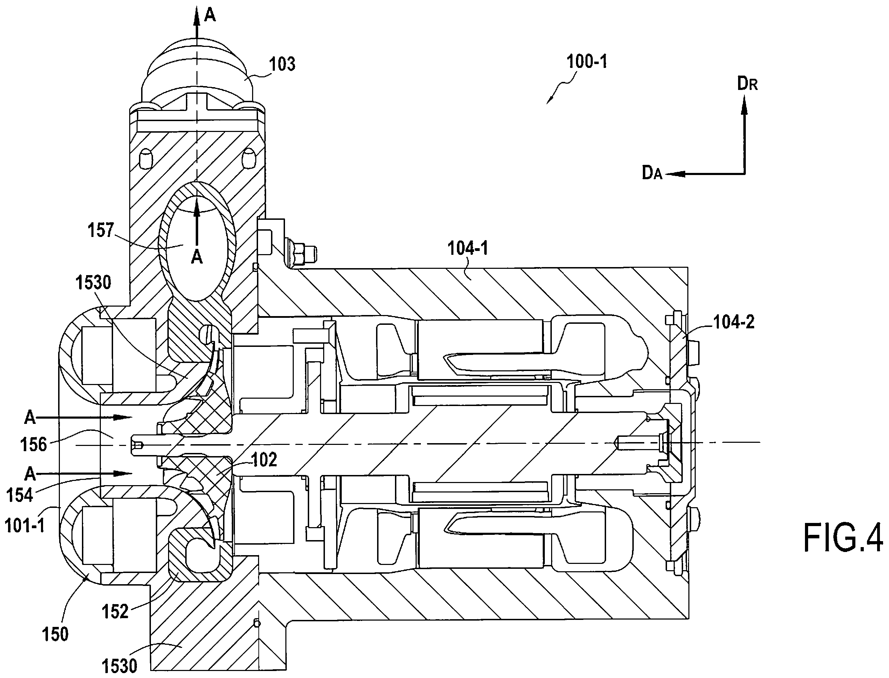

A titre d'exemple, on a représenté sur la figure 4 un compresseur d'air 100-1 qui n'est pas selon l'invention mais auquel peuvent s'appliquer certains aspects des modes de réalisations précédents. Les références numériques inchangées correspondent ici aux pièces précédemment décrites. Dans l'architecture de ce compresseur d'air 100-1, l'ouverture d'admission d'air 101-1 ne s'étend pas circonférentiellement autour de la roue de compression 102 et débouche directement sur la pièce de compression 150. Le compresseur 100-1 d'air comprend par ailleurs un carter 104-1 comprenant un fond plein 104-2. Le carter 104-1 ne comporte ici ni d'ouverture d'admission d'air, ni de canaux d'acheminement d'air. Le flux d'air A, dont la direction de circulation est symbolisée par des flèches unidirectionnelles, est donc ici acheminé directement vers l'orifice central 156 de la pièce de compression 150. Une fois encore, la rotation de la roue de compression 102 accélère et dévie l'air A vers la première extrémité 157a de la gorge 157 de la volute 152. L'air A circulant au travers la gorge 157 de la volute 152 est alors compressé puis expulsé au travers la sortie d'air 103. La volute 152, la portion annulaire (1530) et le tore 154 de la pièce de compression peuvent être réalisés comme précédemment décrit.

Avantageusement, les modes de réalisation décrits ci-dessus permettent de réduire l'impact thermique de l'air A compressé en sortie du compresseur d'air 100, tout en diminuant la masse de ce dernier. Des études expérimentales ont ainsi permis de réduire d'environ 5% la masse du compresseur d'air 100, 100-1 par comparaison aux compresseurs d'air existants, tout en renforçant sa résistance à un éventuel échauffement.

## Revendications

1. Compresseur d'air (100) comprenant:
- une roue de compression (102) de type centrifuge définissant une direction axiale (DA) et une direction radiale (DR),
- une ouverture d'admission d'air (101) s'étendant circonférentiellement autour de la roue de compression (102) et débouchant sur une pièce de compression (150),
- la pièce de compression (150) comprenant une première partie (151) formant une volute (152) d'éjection d'air comprimé montée en regard de la roue de compression (102) dans la direction radiale (DR), et une seconde partie (153) comprenant une portion annulaire (1530) s'étendant autour de la première partie (151), la portion annulaire s'étendant radialement vers l'intérieur et vers l'extérieur à partir de la volute (152), la seconde partie (153) comprenant en outre un tore de déviation d'air (154) prolongeant la portion annulaire (1530) et délimitant un orifice central (156) recevant au moins une partie de la roue de compression (102), le compresseur d'air (100) étant **caractérisé en ce que** la volute (152) est en un matériau métallique et la portion annulaire (1530) de la seconde partie (153) est en matériau thermoplastique chargé en éléments non-métalliques, et **en ce que** le matériau thermoplastique présente une dilatation thermique correspondant à celle du matériau métallique.

2. Compresseur d'air (100) selon la revendication 1, comprenant en outre un premier carter (104) de révolution s'étendant entre l'ouverture d'admission d'air (101) et la pièce de compression (150), au moins un canal d'acheminement d'air (105) permettant à l'air (A) de circuler dans la direction axiale (DA) depuis l'ouverture d'admission d'air (101), et des passages (155) communiquant avec ledit au moins un canal d'acheminement d'air (105) configurés pour permettre à l'air (A) de circuler dans la direction axiale (DA) du canal d'acheminement vers le tore (154).

3. Compresseur d'air (100) selon les revendications 1 ou 2, dans lequel la volute (152) est en Aluminium.

4. Compresseur d'air (100) selon l'une quelconque des revendications 1 à 3, dans lequel la portion annulaire (1530) est en polyétheréthercétone chargé en carbone.

5. Compresseur d'air (100) selon l'une quelconque des revendications 1 à 4, dans lequel la portion annulaire (1530) est une pièce moulée par injection sur la volute (152).

6. Aéronef comprenant un compresseur d'air (100) selon l'une quelconque des revendications 1 à 5.

## Patentansprüche

1. Luftverdichter (100), umfassend:
- ein Verdichtungsrad (102) vom Zentrifugaltyp, das eine axiale Richtung (DA) und eine radiale Richtung (DR) definiert,
- eine Lufteinlassöffnung (101), die sich umlaufend um das Verdichtungsrad (102) herum erstreckt und in ein Verdichtungsstück (150) mündet,
- wobei das Verdichtungsstück (150) einen ersten Teil (151), der eine Spirale (152) zum Ausstoßen von verdichteter Luft bildet, die gegenüber dem Verdichtungsrad (102) in der radialen Richtung (DR) montiert ist, und einen zweiten Teil (153), der einen ringförmigen Abschnitt (1530) umfasst, der sich um den ersten Teil (151) herum erstreckt, umfasst, wobei sich der ringförmige Abschnitt von der Spirale (152) radial nach innen und nach außen erstreckt, wobei der zweite Teil (153) ferner einen Torus (154) zur Umleitung von Luft umfasst, der den ringförmigen Abschnitt (1530) erweitert und eine zentrale Öffnung (156) begrenzt, die mindestens einen Teil des Verdichtungsrads (102) aufnimmt,
wobei der Luftverdichter (100) **dadurch gekennzeichnet ist, dass** die Spirale (152) aus einem metallischen Material besteht und der ringförmige Abschnitt (1530) des zweiten Teils (153) aus einem thermoplastischen Material besteht, das mit nichtmetallischen Elementen beladen ist, und dass das thermoplastische Material eine Wärmeausdehnung aufweist, die derjenigen des metallischen Materials entspricht.

2. Luftverdichter (100) nach Anspruch 1, ferner umfassend ein erstes Drehgehäuse (104), das sich zwischen der Lufteinlassöffnung (101) und dem Verdichtungsstück (150) erstreckt, mindestens einen Luftzufuhrkanal (105), der ermöglicht, dass Luft (A) von der Lufteinlassöffnung (101) in der axialen Richtung (DA) zirkuliert, und Durchgänge (155), die mit dem mindestens einen Luftzufuhrkanal (105) verbunden sind, die derart ausgestaltet sind, dass sie ermöglichen, dass Luft (A) in der axialen Richtung (DA) von dem Zufuhrkanal zu dem Torus (154) zirkuliert.

3. Luftverdichter (100) nach Anspruch 1 oder 2, wobei die Spirale (152) aus Aluminium besteht.

4. Luftverdichter (100) nach einem der Ansprüche 1 bis 3, wobei der ringförmige Abschnitt (1530) aus kohlenstoffbeladenem Polyetheretherketon besteht.

5. Luftverdichter (100) nach einem der Ansprüche 1 bis 4, wobei der ringförmige Abschnitt (1530) ein Stück ist, das auf die Spirale (152) spritzgegossen ist.

6. Luftfahrzeug, umfassend einen Luftverdichter (100) nach einem der Ansprüche 1 bis 5.

## Claims

1. An air compressor (100) comprising:
- a centrifugal-type compression wheel (102) defining an axial direction (DA) and a radial direction (DR),
- an air intake opening (101) extending circumferentially around the compression wheel (102) and opening onto a compression part (150),
- the compression part (150) comprising a first portion (151) forming a volute (152) for the ejection of compressed air which is mounted facing the compression wheel (102) in the radial direction (DR), and a second portion (153) comprising an annular section (1530) extending around the first portion (151), the annular section extending radially inwardly and outwardly from the volute (152), the second portion (153) further comprising an air deflection torus (154) extending the annular section (1530) and delimiting a central orifice (156) receiving at least part of the compression wheel (102),
the air compressor (100) being **characterized in that** the volute (152) is made of a metallic material and the annular section (1530) of the second portion (153) is made of thermoplastic material filled with non-metallic elements, and **in that** the thermoplastic material has a thermal expansion corresponding to that of the metallic material.

2. The air compressor (100) according to claim 1, further comprising a first revolution casing (104) extending between the air intake opening (101) and the compression part (150), at least one air conveying channel (105) allowing air (A) to circulate in the axial direction (DA) from the air intake opening (101), and passages (155) communicating with said at least one air conveying channel (105) configured to allow air (A) to circulate in the axial direction (DA) of the conveying channel towards the torus (154).

3. The air compressor (100) according to claim 1 or 2, wherein the volute (152) is made of Aluminum.

4. The air compressor (100) according to any one of claims 1 to 3, wherein the annular section (1530) is made of carbon-filled polyetheretherketone.

5. The air compressor (100) according to any one of claims 1 to 4, wherein the annular section (1530) is an injection-molded part on the volute (152).

6. An aircraft comprising an air compressor (100) according to any one of claims 1 to 5.
